# NEUE EUROPÄISCHE PATENTSCHRIFT

(11) **EP 0 270 768 B2**
(45) Veröffentlichungstag und Bekanntmachung des Hinweises auf die Entscheidung über den Einspruch: **24.01.1996**
(45) Hinweis auf die Patenterteilung: 11.12.1991
(21) Anmeldenummer: 87114771.6
(22) Anmeldetag: 09.10.1987
(51) Int. Cl.: G01D 11/30, F16D 1/08, F16B 7/04

(54) **Inkrementaler oder absoluter Drehgeber mit einer Klemmvorrichtung**
Incrementor absolute revolution sensor with clamping means
Capteur de rotation absolu ou à incrément avec moyens de fixation

(30) Priorität: 10.12.1986 DE 3642230
(43) Veröffentlichungstag der Anmeldung: 15.06.1988
(73) Patentinhaber: Dr. Johannes Heidenhain GmbH, D-83292 Traunreut (DE)
(72) Erfinder: Fischer, Roland, D-8221 St. Georgen (DE)

(56) Entgegenhaltungen:
- DE-A- 84 165
- DE-A- 3 427 709
- FR-A- 1 256 016
- US-A- 2 691 541
- US-A- 3 576 336

## Beschreibung

Die Erfindung betrifft einen inkrementalen oder absoluten Drehgeber mit einer Klemmvorrichtung gemäß dem Oberbegriff des Anspruches 1.

Derartige inkrementale oder absolute Drehgeber werden insbesondere bei Bearbeitungsmaschinen zur Messung der Relativlage eines Werkzeugs bezüglich eines zu bearbeitenden Werkstücks eingesetzt.

Die FR-A-12 56 016 beschreibt in allgemeiner Form eine Klemmvorrichtung zum Verbinden zweier Werkstücke mittels zweier Klemmelemente und einer Schraube als Betätigungselement. Jedes Klemmelement besitzt im Querschnitt eine schräge Gleitfläche, die sich zwischen zwei senkrechten Wänden befindet.

Aus der DE-C-34 27 709 ist ein Drehgeber mit einer Klemmvorrichtung zur Verbindung der Geberwelle mit der Antriebswelle einer Antriebsbaueinheit bekannt, bei der die Geberwelle als Hohlwelle ausgebildet ist, die an ihrem verbindungsseitigen Ende einen inneren konischen Abschnitt mit mehreren axialen Schlitzen aufweist. Das verbindungsseitige Ende der Geberwelle mit dem konischen Abschnitt greift in eine koaxiale Bohrung eines Verbindungselements ein, das drehfest an die Antriebswelle der Antriebbaueinheit angekuppelt ist. Von der Rückseite des Drehgebers ist in die hohle Geberwelle eine Druckschraube eingesetzt, die den konischen Abschnitt der Geberwelle zur kraftschlüssigen Verbindung der Geberwelle mit dem Verbindungselement aufspreizt. Diese hohle Geberwelle mit dem inneren konischen Abschnitt und den axialen Längsschlitzen ist aber aufwendig in der Herstellung.

Der Erfindung liegt die Aufgabe zugrunde, bei einem Drehgeber eine Klemmvorrichtung zur Verbindung der Geberwelle mit der Antriebswelle einer Antriebsbaueinheit einfacher auszubilden.

Diese Aufgabe wird erfindungsgemäß durch die kennzeichnenden Merkmale des Anspruchs 1 gelöst.

Die mit der Erfindung erzielten Vorteile bestehen insbesondere darin, daß durch das Vorsehen eines Klemmelementes mit einer ersten schrägen Gleitfläche an einer korrespondierenden zweiten schrägen Gleitfläche der Geberwelle und eines in axialer Richtung am Klemmelement angreifenden Betätigungselements in Form einer Schraube eine einfach aufgebaute und herzustellende Klemmvorrichtung geschaffen wird, die eine zuverlässige drehfeste Verbindung der Geberwelle des Drehgebers mit der Antriebswelle der Antriebseinheit ermöglicht.

Vorteilhafte Ausbildungen der Erfindung entnimmt man den abhängigen Ansprüchen.

Ausführungsbeispiele der Erfindung werden anhand der Zeichnung näher erläutert.

Es zeigen
- Figur 1a: einen Drehgeber mit einer ersten Klemmvorrichtung in einem Längsschnitt sowie

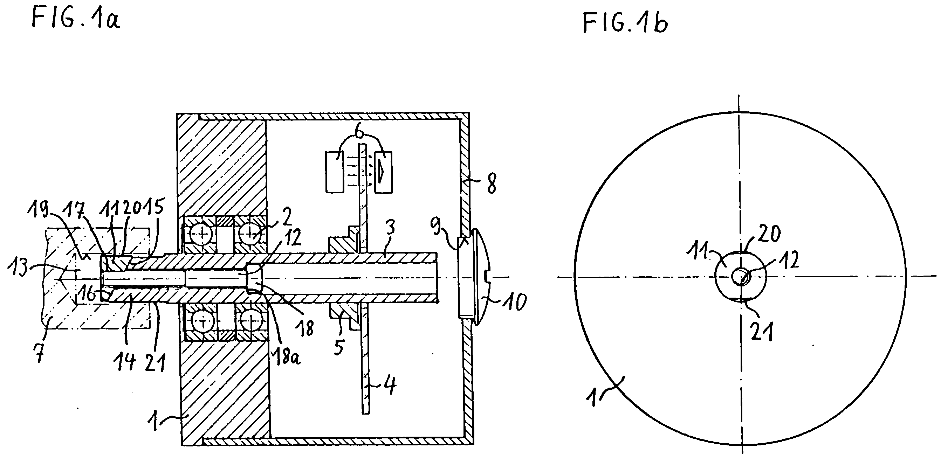

- Figur 1b: in einer Queransicht.

In Figur 1a ist ein inkrementaler oder absoluter Drehgeber mit einer ersten Klemmvorrichtung in einem Längsschnitt und in Figur 1b in einer Queransicht gezeigt. Der Drehgeber weist einen Stator 1 auf, in dem mittels eines Doppelkugellagers 2 eine Geberwelle 3 in Form einer durchgehenden Hohlwelle gelagert ist. Auf der Geberwelle 3 ist eine Teilscheibe 4 mit einer Winkelteilung mittels einer Anschlußnabe 5 koaxial und drehstarr befestigt. Die nicht gezeigte Winkelteilung der Teilscheibe 4 wird von einer bekannten, im Stator 1 befestigten Abtastbaueinheit 6 zur Ermittlung der relativen Winkellage einer Antriebswelle 7 einer nicht dargestellten Antriebsbaueinheit abgetastet. Zum Schutz der Teilscheibe 4 und der Abtastbaueinheit 6 ist der Stator 1 an seiner Rückseite mittels eines Gehäusedeckels 8 gekapselt, der eine zur Geberwelle 3 koaxiale Bohrung 9 aufweist, die durch eine Verschlußkappe 10 verschlossen werden kann. An seiner Vorderseite ist der Stator 1 in nicht gezeigter Weise an einer Anbaufläche der Antriebsbaueinheit befestigt.

Zur drehfesten Verbindung der Geberwelle 3 des Drehgebers mit der Antriebswelle 7 der Antriebsbaueinheit ist eine Klemmvorrichtung mit einem Klemmelement 11 sowie mit einem Betätigungselement 12 in Form einer Zugschraube vorgesehen. Das zylinderförmige Klemmelement 11, das den gleichen Durchmesser wie die Geberwelle 3 aufweist, ist in einer korrespondierenden koaxialen Bohrung 13 der Antriebswelle 7 eingesetzt, in die anschließend das verbindungsseitige Ende 14 der Geberwelle 3 eingeschoben wird. Das Klemmelement 11 weist eine zur Achse der Geberwelle 3 erste schräge Gleitfläche 15 auf, die verschiebbar an einer korrespondierenden zweiten schrägen Gleitfläche 16 des verbindungsseitigen Endes 14 der Geberwelle 3 anliegt. Das Betätigungselement 12 in Form der Zugschraube wird nach Entfernen der Verschlußkappe 10 durch die Bohrung 9 in das Innere 16 der hohlen Geberwelle 3 eingesetzt und mittels eines nicht gezeigten Drehwerkzeuges in ein koaxiales Innengewinde 17 des Klemmelements 11 eingeschraubt; der Kopf 18 der Zugschraube 12 stützt sich an einer Anlagefläche 18a im Inneren 16 der hohlen Geberwelle 3 ab.

Durch ein Anziehen der in axialer Richtung am Klemmelement 11 angreifenden Zugschraube 12 verschieben sich die erste schräge Gleitfläche 15 des Klemmelements 11 und die zweite schräge Gleitfläche 16 der Geberwelle 3 relativ zueinander, so daß das Klemmelement 11 und das verbindungsseitige Ende 14 der Geberwelle 3 gegenläufig in radialer Richtung an die Innenfläche 19 der Bohrung 13 der Antriebswelle 7 zur drehfesten Verbindung der Geberwelle 3 mit der Antriebswelle 7 angedrückt werden.

Zur Verbesserung der radialen Klemmung des Klemmelements 11 und des verbindungsseitigen Endes 14 der Geberwelle 3 weisen das Klemmelement 11 auf seiner Zylinderfläche eine axial verlaufende Planfläche 20 und das verbindungsseitige Ende 14 der Geberwelle 3 auf seiner Zylinderfläche eine Planfläche 21 auf; die die beiden Planflächen 20, 21 begrenzenden Mantellinien auf den Zylinderflächen des Klemmelements 11 und des verbindungsseitigen Endes 14 der Geberwelle 3 liegen diametral gegenüberliegend an der Innenfläche 19 der Bohrung 13 der Antriebswelle 7 zur Bewirkung der Klemmung an.

In bevorzugter Weise wird das Klemmelement 11 durch schräges Abtrennen von der ursprünglich längeren Geberwelle 3 hergestellt; nach dem Abtrennen werden die erste schräge Gleitfläche 15 des Klemmelements 11 und die zweite schräge Gleitfläche 16 des verbindungsseitigen Endes 14 der Geberwelle 3 feinbearbeitet. Zu diesem Zweck wird der später die Zugschraube 12 aufnehmende Teil der hohlen Geberwelle 3 mitsamt dem noch integrierten Klemmelement 11 mit einer koaxialen Bohrung versehen, die zur späteren Herstellung des Innengewindes 17 des noch abzutrennenden Klemmelements 11 benötigt wird. Nach dem Abtrennen des Klemmelements 11 von der Geberwelle 3 wird dieses Innengewinde 17 im Klemmelement hergestellt und die die Zugschraube 12 aufnehmende Bohrung im Innenraum 16 der hohlen Geberwelle 3 auf einen Durchmesser vergrößert, daß der Schaft der Zugschraube 12 keinen Kontakt mit der Innenwand dieser Bohrung im angezogenen Zustand hat.

## Patentansprüche

1. Inkrementaler oder absoluter Drehgeber mit einer Klemmvorrichtung zur drehfesten Verbindung der Geberwelle (3) mit der Antriebswelle (7) einer Antriebsbaueinheit durch radiale Klemmung, dadurch gekennzeichnet, daß ein durch schräges Abtrennen vom verbindungsseitigen Ende (14) der Geberwelle (3) gebildetes Klemmelement (11) mit einer zur Achse der Geberwelle (3) ersten schrägen Gleitfläche (15) an einer korrespondierenden zweiten schrägen Gleitfläche (16) des verbindungsseitigen Endes (14) der Geberwelle (3) vorgesehen ist und daß ein am Klemmelement (11) in axialer Richtung angreifendes Betätigungselement (12) das Klemmelement (11) und das verbindungsseitige Ende (14) der Geberwelle (3) mittels der beiden schrägen Gleitflächen (15, 16) gegenläufig in radialer Richtung an die Antriebswelle (7) andrückt, und daß die Geberwelle (3) als axial durchgehende Hohlwelle ausgebildet ist, daß das Betätigungselement (12) in Form einer Zugschraube mit seinem Kopf (18) an einer Anlagefläche (18a) im Innenraum (16) der hohlen Geberwelle (3) anliegt und in ein Innengewinde (17) des Klemmelements (11) eingreift und daß das Klemmelement (11) und das verbindungsseitige Ende (14) der Geberwelle (3) zur radialen Klemmung an der Innenfläche (19) einer Bohrung (13) in der Antriebswelle (7) angedrückt sind.

2. Drehgeber nach Anspruch 1, dadurch gekennzeichnet, daß das Klemmelement (11) eine axial verlaufende Planfläche (20) auf seiner Zylinderfläche aufweist.

3. Drehgeber nach Anspruch 1, dadurch gekennzeichnet, daß das verbindungsseitige Ende (14) der Geberwelle (3) eine axial verlaufende Planfläche (21) auf seiner Zylinderfläche aufweist.

## Claims

1. Incremental or absolute revolution sensor with a clamping means for non-rotary connection of the sensor shaft (3) to the drive shaft (7) of a drive unit by means of radial clamping, characterised in that a clamp member (11) formed by oblique separation from the end (14) of the sensor shaft (3) at the connection side is provided with a first oblique sliding surface (15) oblique to the axis of the sensor shaft (3) at a corresponding second oblique sliding surface (16) of the end (14) of the sensor shaft (3) at the connection side, and in that an actuating member (12) engaging in an axial direction on the clamping member (11) presses the clamping member (11) and the end (14) of the sensor shaft (3) at the connection side, by means of the two oblique sliding surfaces (15, 16), in opposed directions and radially against the drive shaft (7), and in that the sensor shaft (3) is in the form of an axially-continuous hollow shaft, in that the actuating member (12), in the form of a traction screw, bears with its head (18) on a contact surface (18a) in the interior space (16) of the hollow sensor shaft (3), and engages in an internal tapping (17) of the clamp member (11), and in that the clamping member (11) and the end (14) of the sensor shaft (3) at the connection end are pressed on the internal surface (19) of a bore (13) in the drive shaft (7) in order to provide radial clamping.

2. Revolution sensor according to claim 1, characterised in that the clamping member (11) has an axially-extending plane surface (20) on its cylindrical surface.

3. Revolution sensor according to claim 1, characterised in that the end (14) of the sensor shaft (3) at the connection end has an axially-extending plane surface (21) on its cylindrical surface.

## Revendications

1. Capteur de position angulaire incrémentiel ou absolu comportant un dispositif de serrage pour l'accouplement rigide en rotation par serrage radial de l'arbre du capteur (3) avec l'arbre d'entraînement (7) d'une unité d'entraînement, caractérisé en ce qu'il est prévu un élément de serrage (11) obtenu par tronçonnage oblique de l'extrémité côté accouplement (14) de l'arbre du capteur (3), muni d'une première surface de glissement (15) inclinée par rapport à l'axe de l'arbre du capteur (3) qui est appliquée contre une deuxième surface de glissement (16) inclinée correspondante de l'extrémité côté accouplement (14) de l'arbre du capteur (3), en ce qu'un élément d'actionnement (12) agissant dans la direction axiale sur l'élément de serrage (11) applique avec force l'élément de serrage (11) et l'extrémité (14) côté accouplement de l'arbre du capteur (3) en opposition dans la direction radiale sur l'arbre d'entraînement (7) par l'intermédiaire des deux surfaces de glissement (15, 16) inclinées, en ce que l'arbre du capteur (3) est réalisé sous la forme d'un arbre creux traversant, en ce que l'élément d'actionnement (12) qui se présente sous la forme d'une vis de traction est appliqué par sa tête (18) sur une surface d'appui (18a) à l'intérieur (16) de l'arbre du capteur (3) creux et s'engage dans un taraudage (17) de l'élément de serrage (11) et en ce que l'élément de serrage (11) et l'extrémité (14) côté accouplement de l'arbre du capteur (3) sont appliqués avec force sur la surface intérieure (19) d'un alésage (13) dans l'arbre d'entraînement (7) à des fins de serrage radial.

2. Capteur de position angulaire selon la revendication 1, caractérisé en ce que l'élément de serrage (11) comporte sur sa surface cylindrique une surface plane (20) s'étendant axialement.

3. Capteur de position angulaire selon la revendication 1, caractérisé en ce que l'extrémité (14) côté accouplement de l'arbre du capteur (3) comporte sur sa surface cylindrique une surface plane (21) s'étendant axialement.
